(19) Europäisches Patentamt
European Patent Office
Office européen des brevets

(11) **EP 4 644 913 A1**

(12) **EUROPEAN PATENT APPLICATION**
published in accordance with Art. 153(4) EPC

(43) Date of publication:
**05.11.2025 Bulletin 2025/45**

(21) Application number: **23911401.0**

(22) Date of filing: **09.11.2023**

(51) International Patent Classification (IPC):
***G01N 35/10*** *(2006.01)*

(52) Cooperative Patent Classification (CPC):
**G01N 35/10**

(86) International application number:
**PCT/JP2023/040371**

(87) International publication number:
**WO 2024/142617 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022209497**

(71) Applicant: **HITACHI HIGH-TECH CORPORATION
Tokyo 105-6409 (JP)**

(72) Inventors:
• **MORI Takamichi
Tokyo 105-6409 (JP)**
• **NOJIMA Akihiro
Tokyo 100-8280 (JP)**
• **TANAKA Yuto
Tokyo 105-6409 (JP)**

(74) Representative: **MERH-IP Matias Erny Reichl
Hoffmann
Patentanwälte PartG mbB
Paul-Heyse-Straße 29
80336 München (DE)**

(54) **PROBE CLEANING UNIT**

(57) The purpose of the present invention is to provide a probe cleaning unit capable of accurately measuring the temperature of a cleaning solution, which is used for cleaning a dispenser probe, when heating the cleaning solution. A probe cleaning unit according to the present invention comprises a storage section for containing a cleaning solution, a cylinder section connected to the storage section, and a heater for heating the cleaning solution in the cylinder section. A temperature measuring device for measuring the temperature of the cylinder section is placed above the cylinder section

FIG. 3A

**Description**

Technical Field

The present invention relates to a probe cleaning unit for cleaning a dispensing probe for dispensing a liquid.

Background Art

An automatic analyzer for analyzing a liquid specimen includes a sample probe for dispensing a specimen. To maintain dispensing accuracy, it is common for a user to manually wipe and clean a specimen component or the like adhering to a side surface of a sample probe with a cotton swab, gauze, or the like soaked in alcohol or the like before an analysis is started. By performing cleaning using a high-temperature probe cleaner, it is possible to enhance an effect of removing a contaminant adhering to the sample probe. PTL 1 discloses that a preheated probe cleaner is supplied to a cleaning tank through a heat insulating flow path, and a reagent probe is cleaned using the probe cleaner.

Citation List

Patent Literature

PTL 1: JP2008-202945A

Summary of Invention

Technical Problem

Since the sample probe aspirates and discharges various patient specimens, contaminants, which cannot be removed by cleaning inner and outer surfaces of the sample probe performed at an end of dispensing, may adhere to and accumulate at a tip of the sample probe. When the contaminant adheres to the tip of the sample probe, adhesion of the specimen to the side surface of the sample probe increases when the probe is raised after the specimen is aspirated, and thus there is a possibility that dispensing accuracy cannot be ensured when the specimen is discharged to a reaction container. Alternatively, in a probe raising operation after the specimen is discharged to the reaction container, the specimen may be brought back while still adhered to the tip of the sample probe, which may deteriorate the dispensing accuracy.

To remove such a contaminant, it is common that a user wipes and cleans the tip of the sample probe with gauze or the like soaked in alcohol. The tip of the sample probe has a very small diameter of about 1 mm. Therefore, if a user applies too much force when wiping the tip of the sample probe, the tip may be bent, and in some cases the user may not be able to wipe the tip sufficiently. Therefore, as in PTL 1, it is conceivable to perform cleaning by immersing the probe in a heated probe cleaner.

To heat the probe cleaner, it is necessary to deliver the probe cleaner to a vicinity of a heater. For example, a flow path may be formed downward from a bottom surface of a probe cleaner storage tank, and the heater may be disposed around the flow path to heat the probe cleaner in the flow path. At this time, in order to heat the probe cleaner to a desired temperature, it is desirable to provide a temperature measuring device at a position where a temperature of the probe cleaner can be accurately measured. In the related art such as PTL 1, an appropriate position of the temperature measuring device is not sufficiently considered.

The invention is made in view of the above problems, and an object of the invention is to provide a probe cleaning unit capable of accurately measuring a temperature of a probe cleaner, which is used when the probe cleaner for cleaning a dispensing probe is heated.

Solution to Problem

A probe cleaning unit according to the invention includes a storage section for containing a probe cleaner, a cylinder section connected to the storage section, and a heater for heating the probe cleaner in the cylinder section. A temperature measuring device for measuring a temperature of the cylinder section is placed above the cylinder section.

Advantageous Effects of Invention

According to the probe cleaning unit in the invention, when the probe cleaner for cleaning a dispensing probe is heated, a temperature of the probe cleaner can be accurately measured. Other problems, configurations, advantages, and the like of the invention will become apparent from the following description of embodiments.

Brief Description of Drawings

[FIG. 1] FIG. 1 is a perspective view of an automatic analyzer 100 according to Embodiment 1.
[FIG. 2] FIG. 2 is a schematic diagram illustrating a structure for supplying a probe cleaner to a detergent storage section 118 in probe cleaning mechanisms 14, 24 with a temperature control unit.
[FIG. 3A] FIG. 3A is a structural diagram of the probe cleaning mechanisms 14, 24 with a temperature control unit.
[FIG. 3B] FIG. 3B is a structural diagram of the probe cleaning mechanisms 14, 24 with a temperature control unit.
[FIG. 4A] FIG. 4A is a diagram illustrating an operation of heating the probe cleaner and a method of cleaning a sample probe.
[FIG. 4B] FIG. 4B is a diagram illustrating an operation of heating the probe cleaner and a method of cleaning a sample probe.
[FIG. 5] FIG. 5 is a diagram illustrating a shape example of the detergent storage section 118.
[FIG. 6] FIG. 6 is a diagram illustrating a shape example of a detergent storage cylinder 304.
[FIG. 7] FIG. 7 is a time chart illustrating a method of heating the probe cleaner by a probe cleaner supply syringe 204 and a rubber heater 300.
[FIG. 8] FIG. 8 is a time chart illustrating another method of heating the probe cleaner by the probe cleaner supply syringe 204 and the rubber heater 300.
[FIG. 9] FIG. 9 is a time chart illustrating another method of heating the probe cleaner by the probe cleaner supply syringe 204 and the rubber heater 300.
[FIG. 10] FIG. 10 is a time chart illustrating a probe cleaning procedure according to Embodiment 2.

Description of Embodiments

<Embodiment 1>

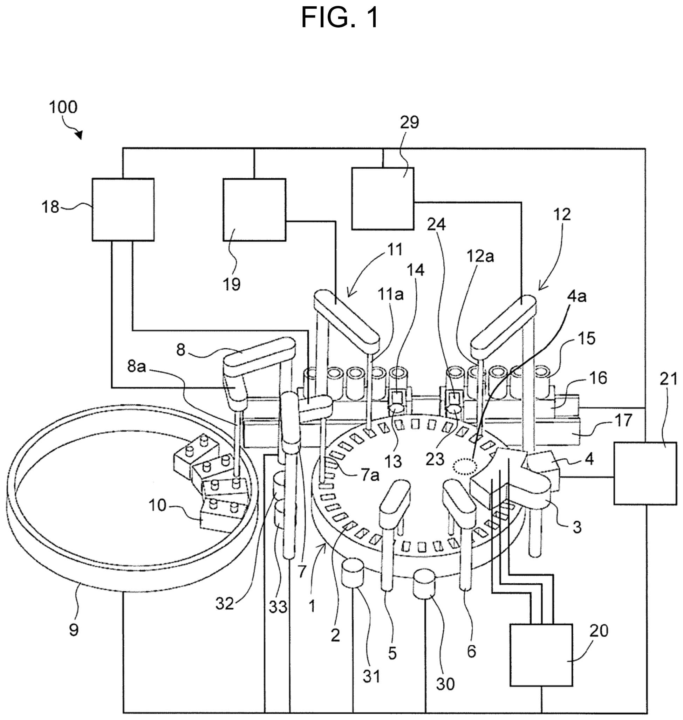

FIG. 1 is a perspective view of an automatic analyzer 100 according to Embodiment 1 in the invention. The automatic analyzer 100 is a device for dispensing a sample and a reagent into a plurality of reaction containers 2 to cause a reaction, and measuring a reacted liquid, and includes a reaction disk 1, a reagent disk 9, a sample conveying mechanism 17, reagent dispensing mechanisms 7 and 8, a reagent syringe 18, a sample dispensing mechanism 11, a sample syringe 19, a cleaning mechanism 3, a light source 4a, a spectrophotometer 4, stirring mechanisms 5 and 6, a cleaning pump 20, cleaning tanks 13, 23, 30, 31, 32 and 33, and a controller 21.
The reaction containers 2 are arranged circumferentially on the reaction disk 1. The sample conveying mechanism 17 that moves a rack 16 where sample containers 15 are placed is installed near the reaction disk 1.
The sample dispensing mechanism 11 that can rotate and move up and down is installed between the reaction disk 1 and the sample conveying mechanism 17. The sample dispensing mechanism 11 includes a sample probe 11a. The sample syringe 19 is connected to the sample probe 11a. The sample probe 11a moves while aspirating an arc around a rotation axis to dispense a sample from the sample container 15 to the reaction container 2. A probe cleaning mechanism 14 with a temperature control unit is a unit to clean the sample probe 11a, and is disposed on a rotation trajectory of the sample probe 11a. A probe cleaner to be used is automatically supplied.
Similarly, a sample dispensing mechanism 12 that can rotate and move up and down is installed between the reaction disk 1 and the sample conveying mechanism 17. The sample dispensing mechanism 12 includes a sample probe 12a. A sample syringe 29 is connected to the sample probe 12a. The sample probe 12a moves while aspirating an arc around a rotation axis to dispense the sample from the sample container 15 to the reaction container 2. A probe cleaning mechanism 24 with a temperature control unit is a unit to clean the sample probe 12a, and is disposed on a rotation trajectory of the sample probe 12a. The probe cleaner to be used is automatically supplied.
A plurality of reagent bottles 10 can be placed circumferentially on the reagent disk 9. The reagent disk 9 is cooled.
The reagent dispensing mechanisms 7, 8 that can rotate and move up and down are provided between the reaction disk 1 and the reagent disk 9, and include reagent probes 7a, 8a, respectively. The reagent syringe 18 is connected to the reagent probes 7a and 8a. The reagent probes 7a and 8a move while aspirating an arc around rotation axes, access an inside of the reagent disk 9, and dispense reagents from the reagent bottles 10 to the reaction containers 2.
Around the reaction disk 1, the cleaning mechanism 3, the light source 4a, the spectrophotometer 4, and the stirring mechanisms 5, 6 are disposed. The cleaning pump 20 is connected to the cleaning mechanism 3. The cleaning tanks 13, 23, 30, 31, 32, and 33 are installed in operation ranges of the reagent dispensing mechanisms 7, 8, the sample dispensing mechanism 11, the sample dispensing mechanism 12, and the stirring mechanisms 5, 6. The cleaning tanks 13, 23, 30, 31, 32, and 33 are for cleaning the probes and the stirring mechanisms using a probe cleaner supplied from the cleaning pump 20. A test sample (specimen) such as blood is contained in the sample container 15, placed on the rack 16, and conveyed by the sample conveying mechanism 17. Each of the mechanisms is connected to the controller 21 and controlled by the controller 21.

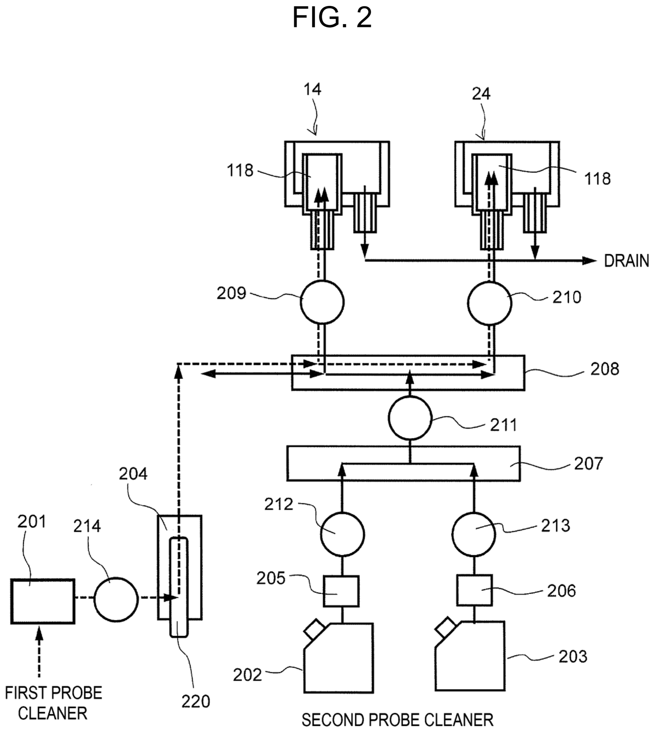

FIG. 2 is a schematic diagram illustrating a structure for supplying the probe cleaner to a detergent storage section 118 in the probe cleaning mechanisms 14 and 24 with a temperature control unit. The structure in FIG. 2 schematically includes a probe cleaner supply pump 201, a probe cleaner supply syringe 204, solenoid valves 209 to 214, branch pipes 207, 208, probe cleaner residual amount sensors 205, 206, and solenoid valves 209 to 214. The probe cleaning mechanisms 14 and 24 with a temperature control unit have a lower opening (drain) for discharging the overflowed probe cleaner. FIG. 2 schematically illustrates the cleaning mechanism that supplies the probe cleaner to two probe cleaning mechanisms 14 and 24 with a temperature control unit.

A first probe cleaner supplied from the probe cleaner supply pump 201 can be automatically supplied to the probe cleaning mechanisms 14 and 24 with a temperature control unit, and a second probe cleaner contained in probe cleaner storage tanks 202, 203 can be supplied to the probe cleaning mechanisms 14 and 24 with a temperature control unit. In addition to replacing the probe cleaner stored in the probe cleaning mechanisms 14 and 24 with a temperature control unit from an old second probe cleaner to a new second probe cleaner, it is also possible to replace the first probe cleaner with the second probe cleaner or replace the second probe cleaner with the first probe cleaner. A supply source of the second probe cleaner can be switched between the probe cleaner storage tank 202 and the probe cleaner storage tank 203 depending on a detection status of the probe cleaner residual amount sensors 205, 206.

The first probe cleaner is, for example, water or a neutral detergent, and the second probe cleaner is, for example, a special probe cleaner which is alkaline or acidic.

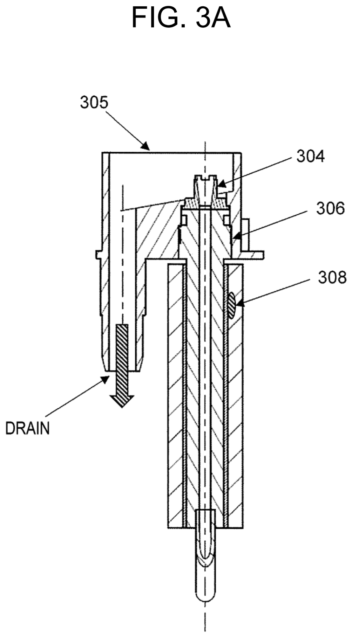

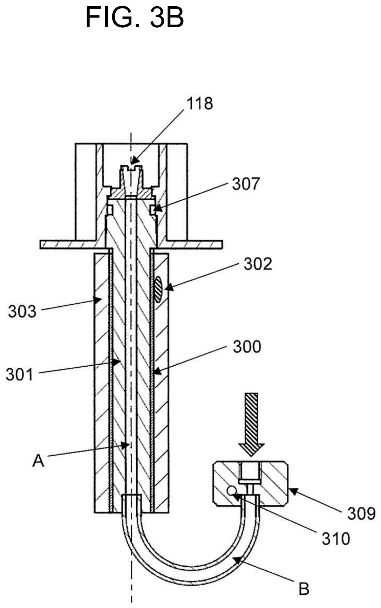

FIGS. 3A and 3B are structural diagrams of the probe cleaning mechanisms 14 and 24 with a temperature control unit. Since these mechanisms have the same structure, the description of each part is common. As will be described in detail later, basic control of the probe cleaning mechanisms 14 and 24 with a temperature control unit is control involving, filling a detergent storage cylinder 304 with the probe cleaner, then operating a plunger 220 of the probe cleaner supply syringe 204 to aspirate the probe cleaner to a position where a rubber heater 300 is wound, and after the probe cleaner is heated to a set temperature by the rubber heater 300, the probe cleaner is returned to the detergent storage cylinder 304.

The rubber heater 300 is wound around a heater cylinder 301, and the probe cleaner filling a flow path A at the portion where the rubber heater 300 is wound is preferentially heated. As a material for the heater cylinder 301, it is desirable to use a stainless steel material in order to ensure chemical resistance to the probe cleaner and to be used while repeatedly heating to 40°C to 70°C.

A temperature rise rate when the rubber heater 300 is heated in this configuration has the following relationship: a lower portion of the heater cylinder 301 < an upper portion of the heater cylinder 301 < a central portion of the heater cylinder 301.

A reason why the temperature rise rate of the lower portion of the heater cylinder 301 is low is that an amount of heat moves toward a flow path B, so that a time required to heat to the set temperature is the longest. Since the central portion and the upper portion of the heater cylinder 301 have a temperature higher than the set temperature, it is difficult to control the temperature.

Between the heater cylinder 301 and the rubber heater 300, a temperature measuring device 302 such as a thermistor or a thermocouple for measuring the temperature of the heater cylinder 301 is disposed, and a safety device 308 such as a thermal fuse or a thermostat for preventing heating is also disposed. The safety device 308 is configured to stop heating by the rubber heater 300 when the temperature measured by the temperature measuring device 302 exceeds a threshold.

The temperature measuring device 302 is disposed at the upper portion of the heater cylinder 301 (a position closer to an end portion on a detergent cleaning tank 305 side than a center of the heater cylinder 301 in a length direction), so that it is easy to control the temperature at which the detergent storage section 118 is filled to an expected temperature. Since the temperature is measured at a position as close as possible to the detergent cleaning tank 305, the temperature can be measured at a position as close as possible to a location where the probe cleaner is used. Accordingly, the probe cleaner in the heater cylinder 301 can be efficiently heated.

The safety device 308 is desirably disposed at the same height as the temperature measuring device 302. When the rubber heater 300 heats the heater cylinder 301, the temperature at the upper portion and the temperature at the lower portion of the heater cylinder 301 differ from each other as described above. Since the safety device 308 prevents bumping or the like that occurs when the temperature becomes uncontrollable and becomes equal to or higher than the set temperature, it is desirable to dispose the safety device 308 above the rubber heater 300 having a larger temperature rise.

It is desirable that a connection portion 309 connected to the probe cleaning mechanisms 14 and 24 with a temperature control unit is not disposed under the heater cylinder 301, but is connected to the heater cylinder 301 at a position separated from the heater cylinder 301. This is because it is necessary to eliminate a possibility that a material for the connection portion 309 repeats thermal expansion due to an influence of heat by the rubber heater 300, weakening coupling of the flow path. The connection portion 309 is disposed at an end of a U-shaped pipe of the flow path B in the example in FIG. 3B, but it is not necessary to follow this flow path shape as long as the connection portion 309 is disposed at a position that is not affected by the heat from the rubber heater 300.

Since the rubber heater 300 is not wound around the upper portion of the heater cylinder 301, the temperature of a portion of the heater cylinder 301 inserted into the detergent cleaning tank 305 is maintained at a set temperature or lower. As a material for the detergent cleaning tank 305, a stainless steel material can be used in consideration of chemical resistance, but manufacturing cost increases. Since an amount of heat generated by the rubber heater 300 to heat the heater cylinder 301 flows into the detergent cleaning tank 305, the stainless steel material is not practical for the purpose of efficiently heating the probe cleaner in a short time. Therefore, by using a resin material having chemical resistance as the material for the detergent cleaning tank 305, the amount of heat generated by the rubber heater 300 to heat the heater cylinder 301 is less likely to flow into the detergent cleaning tank 305, so that the probe cleaner in the flow path A can be efficiently heated, and heating efficiency can be increased while reducing the manufacturing cost.

As a method of fixing the detergent cleaning tank 305 and the heater cylinder 301 to each other, after the detergent storage cylinder 304 is inserted into the detergent cleaning tank 305, the heater cylinder 301 to which an O-ring 307 is attached is inserted into the detergent cleaning tank 305 and fixed by a screw fixing portion 306. A material for the detergent storage cylinder 304 is also preferably a resin material equivalent to that of the detergent cleaning tank 305 in order to maintain the amount of heat. The detergent cleaning tank 305 and the detergent storage cylinder 304 may be integrally formed by molding.

When the probe cleaner replenished in the detergent storage section 118 is aspirated by the sample probe 11a and the sample probe 12a, it is necessary to detect a liquid level and to stop the probe by causing the probe to enter the probe cleaner by a specified amount. When an entry amount varies, unevenness may occur in a cleaning range. For example, if the entry is deep, the sample probe 11a and the sample probe 12a are cleaned in the cleaning tank 13 and the cleaning tank 23 after the probe cleaner is aspirated, the cleaning may be insufficient. In order to stabilize a baseline for stopping liquid level detection, a constant voltage may be applied from a voltage application unit 310 for stabilization. An applied voltage may be applied only when the probe cleaner is aspirated.

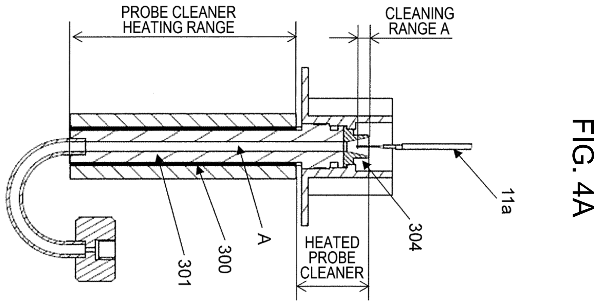

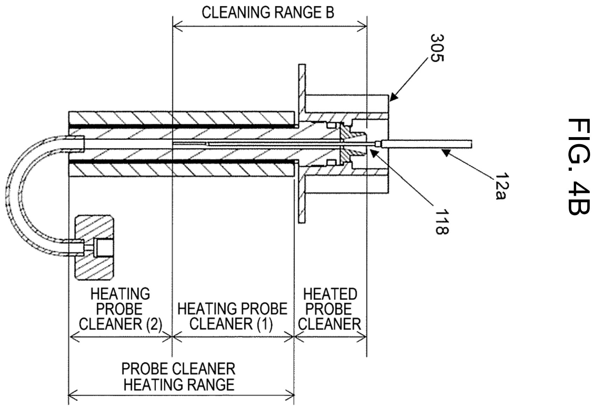

FIGS. 4A and 4B are diagrams illustrating an operation of heating a probe cleaner and a method of cleaning a sample probe. For example, FIG. 4A illustrates the sample probe 11a for colorimetry for aspirating a specimen at a position of several millimeters from an upper surface of the specimen, and FIG. 4B illustrates the sample probe 12a for HbAlc measurement for aspirating a specimen at a position of several millimeters from a bottom of a blood collection tube.

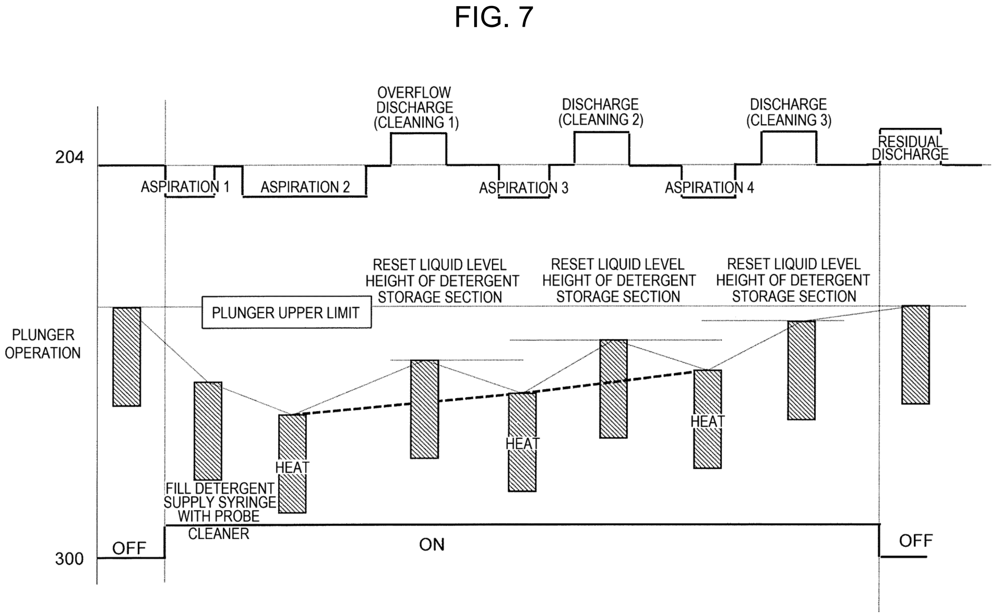

First, a method of heating the probe cleaner will be described. When the probe cleaner is held in the detergent storage section 118, even if the heater cylinder 301 is heated by the rubber heater 300, the flow path A in the heater cylinder 301 above the rubber heater 300 has a long temperature rise time, which is not practical. Therefore, in order to shorten the temperature rise time, the detergent storage section 118 is once filled with the probe cleaner until the detergent storage section 118 is fully opened using the probe cleaner supply syringe 204 (may be overflowed), and then the filling probe cleaner is aspirated into the flow path A. An aspirating amount is set to an upper portion of the rubber heater 300 (for example, about one-third of an entire length of the rubber heater 300 on a side close to the detergent cleaning tank 305), and the probe cleaner is efficiently heated in a probe cleaner heating range. The heated probe cleaner is returned to the detergent storage section 118, and the sample probe is immediately plunged into the probe cleaner, thereby making it possible to immerse and clean the probe in the heated probe cleaner. A repeated cleaning operation will be described with reference to FIGS. 7 to 9.

In an example in FIG. 4A, a side surface of the sample probe 11a can be cleaned with the probe cleaner by making a cleaning range A deeper than an amount of the sample probe 11a entering the specimen. For example, the cleaning range is about 5 mm. An inside of the sample probe 11a can also be cleaned by the probe aspirating the heated probe cleaner. At this time, since a liquid level of the detergent storage section 118 is also lowered as the probe cleaner is aspirated, the sample probe 11a may be lowered in accordance with an aspirating operation so that the cleaning range A is constant. Alternatively, the probe cleaner may be replenished to compensate for an amount that the probe cleaner supply syringe 204 aspirates.

In an example in FIG. 4B, since the sample probe 12a aspirates the specimen at a height of several millimeters from the bottom of the blood collection tube, the cleaning range needs to be a wide range such as a cleaning range B. For example, the cleaning range is about 60 mm. A method of supplying the heated probe cleaner can be performed in the same manner as described with reference to FIG. 4A. However, since a length of the sample probe 12a entering the flow path A increases, the probe cleaner overflows by a capacity of the entering sample probe 12a. Therefore, the sample probe 12a aspirates the overflowing portion, so that the heated probe cleaner can be used for cleaning without waste. Since the sample probe 12a is in a cleaning and heating range, an inside of the sample probe 12a can also be efficiently cleaned.

Further, the probe cleaner heating range heated by the rubber heater 300 is divided into a heating probe cleaner (1) and a heating probe cleaner (2), an area of the heating probe cleaner (1) is set as a cleaning range for the sample probe 12a, and an area of the heating probe cleaner (2) is set as a pre-heating area in a case of repeated cleaning, thereby making it possible to repeatedly use the heated probe cleaner.

In FIG. 4B as well, as in FIG. 4A, the probe cleaner is aspirated into and heated only in an upper portion of the entire length of the sample probe 12a. Even in this case, since the rubber heater 300 is also wound around a side surface from a center to a lower side of the sample probe 12a, the probe cleaner is heated in the same way as in the upper portion. Therefore, in FIG. 4B as well, it is added that the entire sample probe 12a can be cleaned using the heated probe cleaner.

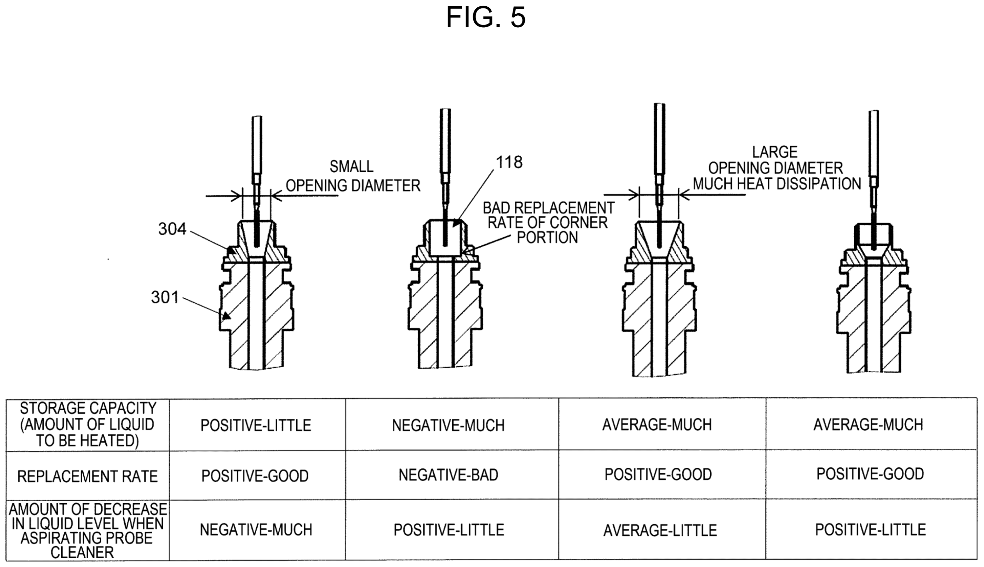

FIG. 5 is a diagram illustrating a shape example of the detergent storage section 118. The probe cleaning mechanisms 14 and 24 with a temperature control unit replace the probe cleaner in the detergent cleaning tank 305 from the first probe cleaner to the second probe cleaner according to a state of the device. For example, the first probe cleaner is for filling during device shutdown. When the first probe cleaner is replaced with the second probe cleaner, it is necessary to perform the replacement efficiently to reduce consumption of the second probe cleaner, and in addition, it is necessary to prevent heat dissipation from the heated probe cleaner.

Advantages and disadvantages of each shape of the detergent storage section 118 will be described. The most important factors include shortening a time required for heating and a replacement rate of the first probe cleaner with the second probe cleaner. Here, the replacement rate indicates how much of the second probe cleaner needs to be consumed in order to replace the probe cleaner in the storage cylinder from the first probe cleaner to the second probe cleaner. The better the replacement rate, the less the consumption amount. In the example in a left end of FIG. 5, lowering of the liquid level after the probe cleaner is aspirated is exemplified as a disadvantage, but it is only necessary to lower the sample probe 11a while aspirating the probe cleaner, and thus, there is no problem.

"Small opening diameter" shown in FIG. 5 means that a diameter of an upper end (opening) of the detergent storage cylinder 304 is five times or less a diameter of the sample probe. When the diameter of the sample probe is 1 mm, if the diameter of the opening of the detergent storage cylinder 304 is 5 mm or less, it is considered to have a "small opening diameter".

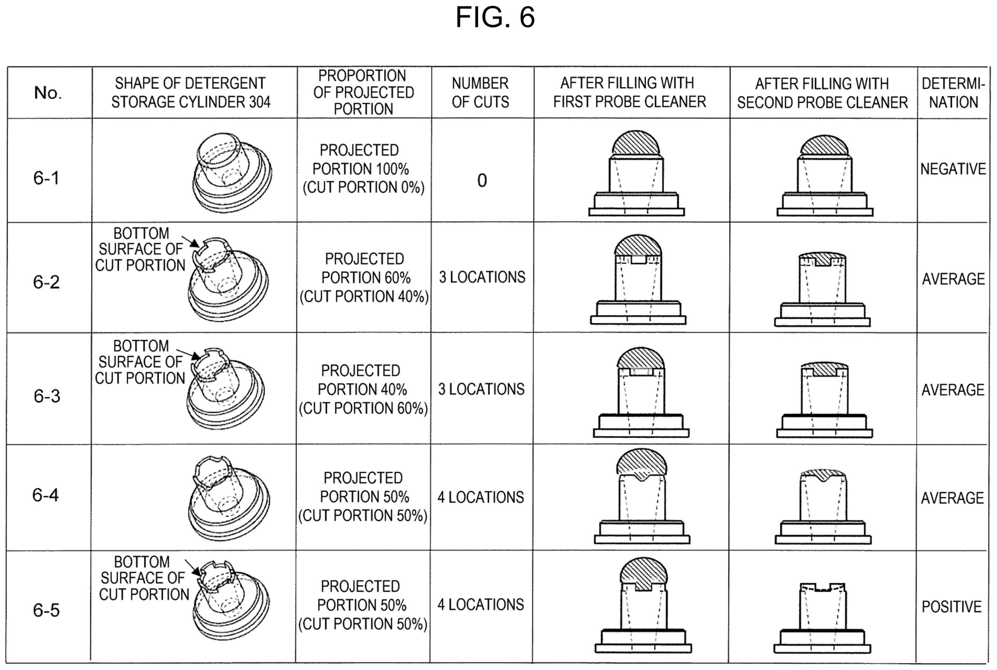

FIG. 6 is a diagram illustrating a shape example of the detergent storage cylinder 304. When the sample probe 11a aspirates the second probe cleaner after the second probe cleaner is supplied to the detergent storage cylinder 304, it is necessary to maintain a stable height without changing a liquid level height of the probe cleaner. For example, when the second probe cleaner swollen due to a surface tension flows down due to vibration of the sample probe 11a or the like after the sample probe 11a is stopped, an immersion amount required to clean a tip of the sample probe 11a varies. Here, it is assumed that the second probe cleaner is a probe cleaner having good wettability such as a probe cleaner containing a surfactant.

That is, since it is difficult to constantly stabilize the liquid level height when the probe cleaner is swollen due to the surface tension, it is necessary to naturally discharge the liquid level swollen due to the surface tension and to constantly make the height uniform after the second probe cleaner is supplied. If the liquid level height of the second probe cleaner can be always controlled uniformly, the immersion amount for cleaning the tip of the sample probe 11a can be controlled to a constant amount, even when control such as pulse stop is used instead of liquid level detection as a method of stopping the sample probe 11a. In the case of the pulse stop, since an operation can be performed at a higher speed than the liquid level detection stop, there are advantages that an immersion time can be increased and the cleaning can be started sooner before a temperature of the heated probe cleaner drops.

In a shape 6-1, after both the first probe cleaner and the second probe cleaner are supplied, the liquid level is maintained raised due to the surface tension. Therefore, it is difficult to stabilize the liquid level height, which is not desirable. Meanings of a projected portion and a cut portion will be described later.

In a shape 6-2, a proportion of the projected portion of the detergent storage cylinder 304 is 60%. A cutout (cut) portion can be provided in a side wall of a cut portion of the detergent storage cylinder 304. The cut portion is a portion where a side wall of the detergent storage cylinder 304 is missing, and is formed such that the side wall of the detergent storage cylinder 304 is recessed from a top portion. The projected portion is a portion where the side wall of the detergent storage cylinder 304 is formed. For example, when the projected portion is 60%, the side wall is formed in 60% of a planar shape of the side wall of the detergent storage cylinder 304 (a shape in a plane perpendicular to an extending direction of the detergent storage cylinder 304), and a remaining portion 40% is the cut portion. In the shape 6-2, the second probe cleaner flows down through the cut portion, but since the liquid level is higher than a bottom surface of the cut portion, it is not possible to predict when the liquid flows down through the cut portion. A similar result as the shape 6-2 is obtained in shapes 6-3 and 6-4.

A shape 6-5 has a proportion of the projected portion and the cut portion of 50% each. In this shape, immediately after filling with the second probe cleaner, a state is similar as that of the second probe cleaner of the shape 6-1, but via the bottom surface of the cut portion, a state of the shape 6-5 "after filling with second probe cleaner" is immediately obtained. From this state, a liquid height of the second probe cleaner does not change. Considering a comparison with the shape 6-1 to the shape 6-4, in order to keep the same liquid level constant in a state raised due to the surface tension, it is only necessary to prevent both the projected portion and the cut portion from being too many or too few. For example, both the projected portion and the cut portion may be $50\pm5\%$ (a total of both is 100%).

In a case of the shape 6-5, immediately after the second probe cleaner is supplied, a state of the shape 6-5 "after filling with second probe cleaner" is obtained. Therefore, after the first probe cleaner is replaced with the second probe cleaner in order to clean the sample probe 11a, by using the liquid level detection as a method of stopping the probe, it is possible to calculate a lowering amount to a position where the sample probe 11a is stopped, and based on the result, to determine whether the probe cleaner with which the detergent storage cylinder 304 is filled is the first probe cleaner or the second probe cleaner. This is because the liquid level height quickly reaches a state of "after filling with second probe cleaner" in the shape 6-5 and stabilizes. Further, it is also possible to detect an abnormality in a probe cleaner supply flow path. For example, if there is an abnormality somewhere (for example, a valve or the like) in the probe cleaner flow path, the replacement of the first probe cleaner with the second probe cleaner does not proceed, and the state of the shape 6-5 becomes "after filling with first probe cleaner", and thus the state is detected by the liquid level detection, and it can be determined that there is an abnormality in the flow path. The determination may be performed by the controller 21, for example.

FIG. 7 is a time chart illustrating a method of heating the probe cleaner by the probe cleaner supply syringe 204 and the rubber heater 300. A plunger operation of the probe cleaner supply syringe 204 will be described as an operation linked to aspirating and discharging operations of the probe cleaner supply syringe 204. For example, an aspirating amount increases according to an amount of downward movement of the plunger. In an example in FIG. 7, the number of times of repeated cleaning of the probe cleaning mechanism 14 with a temperature control unit is set to three times, and the probe cleaner after completion of temperature rise is caused to overflow, and a liquid level in the detergent storage cylinder 304 is stabilized.

First, after the rubber heater 300 is turned on, the probe cleaner supply syringe 204 is filled with the probe cleaner by aspiration 1. A specific operation will be described by taking a supply operation on a side of the probe cleaning mechanism 14 with a temperature control unit in FIG. 2 as an example. If the solenoid valves 209, 210, 213, and 214 are closed and the plunger 220 is lowered for aspiration, the flow path can be filled with the second probe cleaner. After the aspiration 1, if the solenoid valves 210, 211, 212, 213, and 214 are closed and the solenoid valve 209 is opened, a liquid level of the detergent storage section 118 can be controlled in accordance with upper and lower operations of the plunger 220.

An aspirating amount of the aspiration 1 is as follows:

$$\text{aspirating amount of aspiration 1} = \text{overflow capacity (evaporation amount)} + (\text{probe cleaner consumption amount} \times (N\text{-}1) \text{ times}) + \text{residual discharge capacity} \qquad \text{(Formula 1)}$$

After completion of heating the probe cleaner, overflow discharge (cleaning 1) is performed by aspiration 2. An aspirating amount 2 is as follows:

$$\text{aspirating amount of aspiration 2} = \text{capacity of heated probe cleaner} - \text{overflow capacity (evaporation amount)} \qquad \text{(Formula 2)}$$

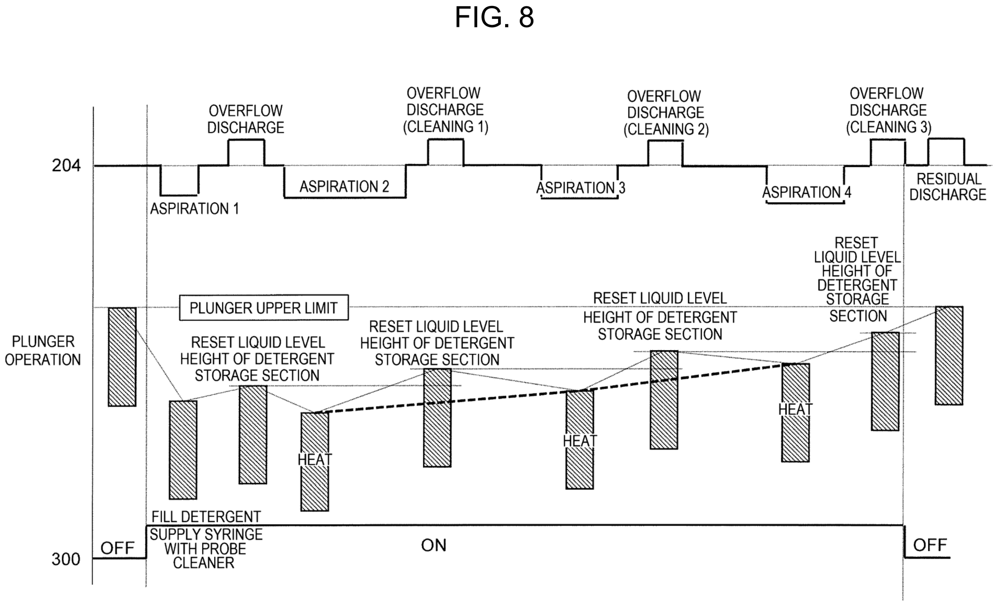

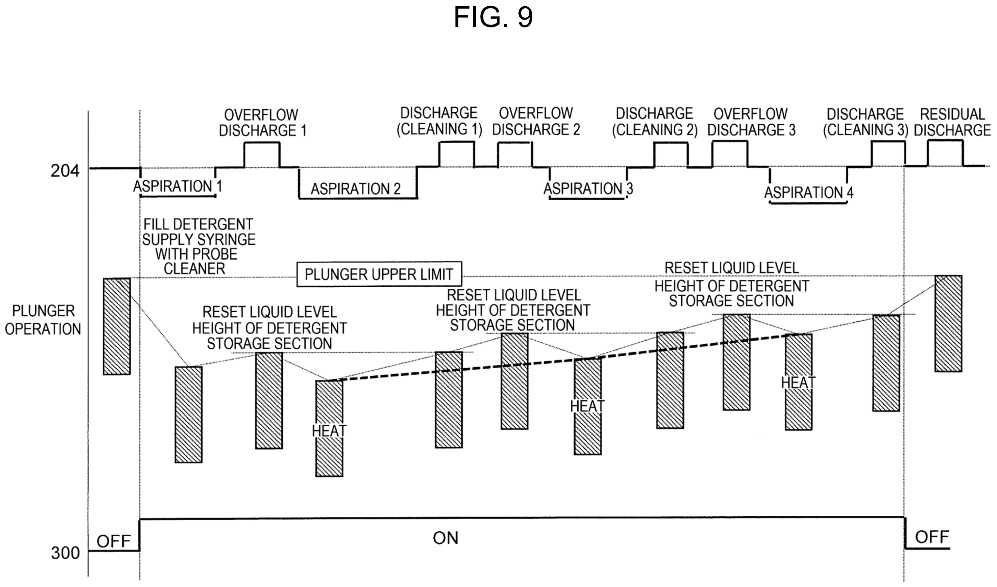

In order to efficiently exchange heat from the heater cylinder 301, it is desirable that an aspirating amount of the probe cleaner for heating the probe cleaner is aligned with an upper portion of the probe cleaner heating range in FIGS. 4A and 4B (the side close to the detergent cleaning tank 305). When the probe cleaner is aspirated only to a position higher than the upper portion of the probe cleaner heating range, the probe cleaner at the position higher than the upper portion of the probe cleaner heating range is difficult to be heated because the heat of the rubber heater 300 is difficult to be transmitted thereto. When the probe cleaner is aspirated to a position lower than the upper portion of the probe cleaner heating range, air is heated by heat of the rubber heater 300, so that heating efficiency decreases. Therefore, it is desirable that the aspirating amount is up to the upper portion of the probe cleaner heating range. The same concept applies to the following FIGS. 8 and 9.

In the present embodiment, since the evaporation amount of the probe cleaner cannot be accurately grasped at the time of the aspiration 1, the probe cleaner may be present in the upper portion of the probe cleaner heating range at the time of the aspiration 2. However, since an opening diameter of the detergent storage section 118 is reduced, the evaporation amount during an analysis operation may be considered as a small amount.

After overflow discharge (cleaning 1) is performed and the liquid level of the detergent storage section 118 is stabilized, the sample probe 11a aspirates the heated probe cleaner to clean an outside and the inside of the sample probe 11a. A discharge amount at this time is as follows, the probe cleaner overflows from the detergent storage section 118, and a probe cleaner height is stabilized:

$$\text{discharge amount of overflow discharge (cleaning 1)} = \text{capacity of heated probe cleaner}$$

(Formula 3)

That is, even if a height of a liquid level of the probe cleaner in the detergent storage section 118 is an irregular height due to evaporation or the like before the start of cleaning, a liquid height before cleaning of the sample probe 11a can be managed by making the evaporation amount < overflow discharge.

Next, aspiration 3 is performed. An aspirating amount 3 is as follows:

$$\text{aspirating amount of aspiration 3} = \text{capacity of heated probe cleaner - probe cleaner consumption amount} \qquad \text{(Formula 4)}$$

Next, discharge (cleaning 2) is performed after completion of heating. A discharge amount at this time is as follows:

$$\text{discharge amount of discharge (cleaning 2)} = \text{capacity of heated probe cleaner}$$

(Formula 5)

At this time, it is not necessary to overflow. Since a capacity of the probe cleaner aspirated by the sample probe 11a in the overflow discharge (cleaning 1) can be accurately managed by a syringe operation and there is no variation, (Formula 4) and (Formula 5) hold. Since the heated probe cleaner is not discarded, cleaning can be performed without waste.

Aspiration 4 and discharge (cleaning 3) may be performed in the same manner as the aspiration 3 and the discharge (cleaning 2). After the cleaning of the sample probe 11a is completed, residual discharge is performed to complete the cleaning operation.

FIG. 8 is a time chart illustrating another method of heating the probe cleaner by the probe cleaner supply syringe 204 and the rubber heater 300. In an example in FIG. 8, the number of times of repeated cleaning of the probe cleaning mechanism 14 with a temperature control unit is set to three times, and after the probe cleaner is heated and aspirated, the probe cleaner is caused to overflow before cleaning the sample probe 11a to stabilize the liquid level, and then the sample probe 11a is cleaned.

First, after the rubber heater 300 is turned on, the probe cleaner supply syringe 204 is filled with the probe cleaner by aspiration 1. An aspirating amount is as follows. A solenoid valve operation of FIG. 2 is similar as that of FIG. 7:

$$\text{aspirating amount of aspiration 1} = \text{overflow capacity (evaporation amount)} + \text{(overflow capacity + probe cleaner consumption amount)} \times \text{(N-1) times + residual discharge capacity} \qquad \text{(Formula 6)}$$

Next, overflow discharge is performed.

$$\text{Overflow discharge amount} = \text{overflow capacity (evaporation amount)} \qquad \text{(Formula 7)}$$

Aspiration 2 is performed after the liquid level of the detergent storage section 118 is stabilized. An aspirating amount is as follows:

$$\text{aspirating amount 2} = \text{capacity of heated probe cleaner} \qquad \text{(Formula 8)}$$

After completion of heating, overflow discharge (cleaning 1) is performed, and after the liquid level of the detergent storage section 118 is stabilized, the sample probe 11a aspirates the heated probe cleaner to clean the outside and the inside of the sample probe 11a. A discharge amount at this time is as follows:

$$\text{Overflow discharge (cleaning 1)} = \text{capacity of heated probe cleaner} + \text{overflow capacity}$$

(Formula 9)

Next, aspiration 3 is performed. An aspirating amount is as follows:

$$\text{aspiration 3} = \text{capacity of heated probe cleaner - probe cleaner consumption amount}$$

(Formula 10)

Next, overflow discharge (cleaning 2) is performed after completion of heating. A discharge amount at this time is performed in the same manner as in (Formula 9), the next aspiration 4 is performed in the same manner as in (Formula 10), and the next overflow discharge (cleaning 3) is performed in the same manner as in (Formula 9). After the cleaning is completed, residual discharge is performed to complete the cleaning operation.

FIG. 9 is a time chart illustrating another method of heating the probe cleaner by the probe cleaner supply syringe 204 and the rubber heater 300. In an example in FIG. 9, the number of times of repeated cleaning of the probe cleaning mechanism 14 with a temperature control unit is set to three times, and heating is performed after the probe cleaner height is reset.

The probe cleaner supply syringe 204 is filled with the probe cleaner in aspiration 1. An aspirating amount is as follows. A solenoid valve operation of FIG. 2 is similar as that of FIG. 7:

$$\text{aspirating amount of aspiration 1} = \text{overflow capacity (evaporation amount)} + \text{(overflow capacity} + \text{probe cleaner consumption amount)} \times \text{(N-1) times} + \text{residual discharge capacity} \quad \text{(Formula 11)}$$

Aspiration 2 is performed after the liquid level of the detergent storage section 118 is stabilized. An aspirating amount is as follows:

$$\text{aspirating amount 2} = \text{capacity of heated probe cleaner (Formula 12)}$$

After the completion of heating, discharge (cleaning 1) is performed, and the sample probe 11a aspirates the heated probe cleaner to clean the outside and the inside of the sample probe 11a. Since an overflow operation in the detergent storage section 118 is unnecessary, it is not necessary to wait until the liquid level is stabilized. Therefore, since an amount of heat dissipated is small, the sample probe 11a can be cleaned with the heat of the probe cleaner without waste. A discharge amount is as follows:

$$\text{discharge (cleaning 1)} = \text{capacity of heated probe cleaner (Formula 13)}$$

Next, overflow discharge 2 is performed. A discharge amount is as follows:

$$\text{Overflow discharge 2} = \text{probe cleaner consumption amount} + \text{overflow capacity}$$

(Formula 14)

Aspiration 3 is performed after the probe cleaner height of the detergent storage section 118 is stabilized. An aspirating amount of the aspiration 3 is similar as (Formula 12). Next, discharge (cleaning 2) is performed. A discharge amount is similar as in (Formula 13).

An overflow discharge 3 operation is similar as (Formula 14), aspiration 4 is similar as (Formula 12), and discharge (cleaning 3) is similar as (Formula 13). After the cleaning of the sample probe 11a is completed, residual discharge is performed to complete the cleaning operation.

Next, features of the operations of FIGS. 7 to 9 will be described. In the operations of FIGS. 7 and 8, since the upper and lower operations of the plunger 220 may be less than that of FIG. 9, there is an advantage that a life of mechanical components can be extended with respect to wear.

In the example in FIG. 7, after the liquid level is stabilized in the first overflow discharge (cleaning 1), only the consumed probe cleaner is added and aspirated, so that it is not necessary to overflow the heated probe cleaner and the probe cleaner is not wasted. Of course, in an operation from the discharge (cleaning 1) to the discharge (cleaning 3), the probe cleaner may be intentionally overflowed and discharged to clean the sample probe 11a after a liquid height of the detergent storage section 118 becomes constant.

Regarding a consumption amount of the probe cleaner, the operation in FIG. 8 consumes the largest amount, and the operation in FIG. 7 consumes the smallest amount. FIG. 9 illustrates the consumption amount between the consumption amount in FIG. 8 and in FIG. 7.

Regarding the operation for quickly cleaning the sample probe 11a with the heated probe cleaner, the cleaning can be started immediately after the discharge cleaning operation in FIG. 9, therefore FIG. 9 is the fastest to start cleaning. In FIG. 8, since it is necessary to wait until the liquid level height of the detergent storage section 118 is stabilized after each overflow discharge, a time required to start cleaning is the longest. FIG. 7 illustrates a time required between a time in FIG. 9 and in FIG. 8.

<Embodiment 2>

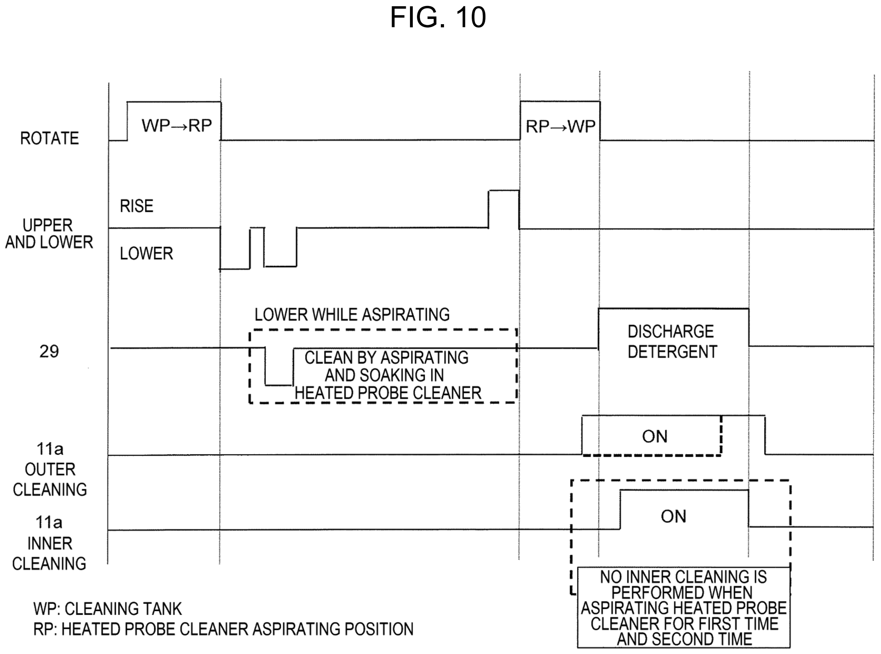

FIG. 10 is a time chart illustrating a probe cleaning procedure according to Embodiment 2 in the invention. Since a configuration of the automatic analyzer 100 is similar as that of Embodiment 1, a difference in a cleaning procedure will be mainly described below.

When the sample probe 11a in the related art is cleaned, a cleaning tank is filled with a probe cleaner at room temperature, and the sample probe 11a is repeatedly subjected to inner cleaning (cleaning of an inner surface) and outer cleaning (cleaning of an outer surface) several times using the probe cleaner. In contrast, in order to efficiently use the heated probe cleaner, the sample syringe 19 is operated to aspirate the heated probe cleaner with the sample probe 11a and then the probe cleaner is discarded in the cleaning tank, and at that time, it is conceivable that only the sample syringe 19 is operated to discharge the probe cleaner in the sample probe 11a without performing the inner cleaning and the outer cleaning. In the present embodiment, based on such a concept, a procedure for efficiently using the heated probe cleaner will be described.

The sample probe 11a is stopped while being entered into the heated probe cleaner by the liquid level detection or pulse stop, and the probe cleaner is aspirated by the sample syringe 19. At this time, since the liquid level of the detergent storage section 118 is lowered with the aspiration of the probe cleaner, the sample probe 11a is lowered so that an immersion amount of the side surface of the sample probe 11a does not change, and is stopped for a certain time. By maintaining this state, the outside and the inside of the sample probe 11a are immersed in the probe cleaner, thereby performing cleaning.

After cleaning by immersion, the probe is moved to the cleaning tank to discard the aspirated probe cleaner (RP → WP). At this time, the aspirated probe cleaner is simply discarded, and the inner cleaning and the outer cleaning are not performed. This is because when the inner cleaning and the outer cleaning are performed while a surface temperature of the sample probe 11a is heated by the heated probe cleaner, the temperature drops. That is, it is desirable to perform the inner cleaning and the outer cleaning in a latter half or last cycle of the determined number of times of cleaning (in this example, third cleaning). To prevent droplets of the probe cleaner on the tip of the sample probe 11a from scattering, very slight outer cleaning for removing the droplets may be performed at any time in a cycle.

To repeat effective cleaning, it is necessary to aspirate the probe cleaner in the detergent storage section 118 and repeat heating again while the sample probe 11a is moving to the cleaning tank before the temperature in the probe cleaner in the detergent storage section 118 drops. Since the rubber heater 300 is in an ON state and the heater cylinder 301 is in a heated state, second and subsequent heating operations can be performed in a shorter time than a first heating operation, so that cleaning with the repeatedly heated probe cleaner can be performed.

In the present embodiment, the method of cleaning the sample probe with the heated probe cleaner is described, but in a carryover avoidance operation performed in a normal analysis, it is also possible to use the probe cleaning mechanism 14 or 24 with a temperature control unit as a probe cleaner automatic supply unit using the probe cleaner at room temperature which is not heated.

<Modifications of Invention>

In FIG. 10, the outer cleaning and the inner cleaning after the immersion cleaning of the probe may be performed by the procedure described in FIGS. 7 to 9, or the outer cleaning and the inner cleaning may be performed only in the latter half or last cycle of the predetermined number of cycles as described in FIG. 10.

In the above embodiment, it may be possible to switch between cleaning steps in FIGS. 7 to 10. For example, the controller 21 may provide a user interface for the user to specify which cleaning step is to be performed.

In the embodiment in FIG. 2, a configuration is described in which two second probe cleaners are installed and there is a changeover function for the second probe cleaner, but the supply operation of the probe cleaner is the same in a configuration in which the second probe cleaner is contained only in the probe cleaner storage tank 202.

In the above embodiment, a configuration example is described in which the sample probe used in an automatic biochemical analyzer is cleaned, but the probe cleaning mechanism 14 or 24 with a temperature control unit can also be used for other probes (for example, reagent probe). That is, the above embodiment can be used in any analyzer having a probe that aspirates a specimen or a reagent.

In the above embodiment, the flow path A may be implemented by the hollow portion of the heater cylinder 301 itself, or may be implemented by disposing a flow path member in the hollow portion of the heater cylinder 301. In either case, the fact remains that some kind of flow path is disposed in the hollow portion of the heater cylinder 301.

In the above embodiment, the rubber heater 300 can operate as a heater as long as the rubber heater 300 is wound to cover at least a part of a side surface of the heater cylinder 301. Similarly, as long as a heat insulating material 303 covers at least a part of the side surface of the heater cylinder 301, the heat insulating material 303 can exert a heat insulating effect within that range.

In FIGS. 4A and 4B, it is described that the sample probes 11a and 12a can be cleaned by being immersed in the probe cleaner. Further, the probe cleaning mechanism 14 or 24 with a temperature control unit may be configured to clean three or more types of probes (including a sample probe and other probes). For example, even when the longest probe among the probes having various lengths is immersed, the heater cylinder 301 (and the flow path A, the rubber heater 300, and the heat insulating material 303) may be configured such that a surplus portion is formed below the flow path A similarly to the heating probe cleaner (2) in FIG. 4B.

Reference Signs List

100: automatic analyzer
1: reaction disk
2: reaction container
3: cleaning mechanism
4: spectrophotometer
4a: light source
5: stirring mechanism
6: stirring mechanism
7, 8: reagent dispensing mechanism
7a, 8a: reagent probe
9: reagent disk
10: reagent bottle
11: sample dispensing mechanism
11a: sample probe
12: sample dispensing mechanism
12a: sample probe
13: cleaning tank
14: probe cleaning mechanism with temperature control unit
15: sample container
16: rack
17: sample conveying mechanism
18: reagent syringe
19: sample syringe
20: cleaning pump
21: controller
23: cleaning tank
24: probe cleaning mechanism with temperature control unit
29: sample syringe
30: cleaning tank
31: cleaning tank
32: cleaning tank
33: cleaning tank
118: detergent storage section

201: probe cleaner supply pump
202: probe cleaner storage tank
203: probe cleaner storage tank
204: probe cleaner supply syringe
205: probe cleaner residual amount sensor
206: probe cleaner residual amount sensor
207: branch pipe
208: branch pipe
209: solenoid valve
210: solenoid valve
211: solenoid valve
212: solenoid valve
213: solenoid valve
214: solenoid valve
220: plunger
300: rubber heater
301: heater cylinder
302: temperature measuring device
303: heat insulating material
304: detergent storage cylinder
305: detergent cleaning tank
306: screw fixing portion
307: O-ring
308: safety device
309: connection portion
310: voltage application unit

**Claims**

1. A probe cleaning unit for cleaning a dispensing probe configured to dispense a liquid, the probe cleaning unit comprising:

    a storage section for storing a probe cleaner;
    a cylinder section having a hollow portion in which a first flow path connected to the storage section is disposed;
    a heater covering at least a part of a side surface of the cylinder section and configured to heat the probe cleaner in the first flow path; and
    a temperature measuring device configured to measure a temperature of the cylinder section, wherein
    the temperature measuring device is disposed at a position closer to a first end portion of the heater on a side of the storage section, of the first end portion and a second end portion on a side opposite to the first end portion.

2. The probe cleaning unit according to claim 1, further comprising:

    a safety device configured to stop heating by the heater when a temperature of the cylinder section becomes equal to or higher than a predetermined temperature, wherein
    the safety device is disposed at a position closer to the first end portion, of the first end portion and the second end portion.

3. The probe cleaning unit according to claim 1, wherein

    the storage section and the first flow path are configured such that the dispensing probes having a plurality of types of lengths are allowed to be immersed therein, and
    a length of the first flow path disposed in the hollow portion is longer than a longest dispensing probe of the dispensing probes having the plurality of types of lengths.

4. The probe cleaning unit according to claim 1, further comprising:

    a second flow path disposed outside the cylinder section and connected to the first flow path; and

a connection portion connected to the second flow path, wherein
the second flow path is configured such that the connection portion is disposed at a position not on an extension line of the first flow path that is linearly extended.

5. The probe cleaning unit according to claim 1, further comprising:

a storage cylinder having a hollow portion connected to the first flow path and protruding from the cylinder section toward the storage section, wherein
the storage cylinder has an opening portion for introducing the dispensing probe into the probe cleaner contained in the hollow portion,
the hollow portion has a shape gradually expanding from a side connected to the first flow path toward the opening portion, and
an opening diameter of the opening portion is five times or less a diameter of the dispensing probe.

6. The probe cleaning unit according to claim 1, further comprising:

a storage cylinder having a hollow portion connected to the first flow path and protruding from the cylinder section toward the storage section, wherein
an end portion of a side wall of the storage cylinder on a side not connected to the first flow path has a cutout portion, and
a proportion of a portion where the cutout portion is formed, of a planar shape of the side wall of the end portion on a plane perpendicular to a direction in which the first flow path extends, is 45% or more and 55% or less of the planar shape.

7. The probe cleaning unit according to claim 1, further comprising:
a heat insulating material covering at least a part of a side surface of the heater.

8. The probe cleaning unit according to claim 1, wherein
the storage section is made of a resin material.

9. The probe cleaning unit according to claim 1, wherein
the cylinder section is made of stainless steel.

10. The probe cleaning unit according to claim 1, further comprising:

a syringe configured to deliver the probe cleaner to the storage section or aspirate the probe cleaner from the storage section into the first flow path, wherein
the syringe aspirates the probe cleaner from the storage section into the first flow path,
the heater heats the probe cleaner aspirated into the first flow path,
the syringe delivers the probe cleaner heated in the first flow path to the storage section, and
the probe cleaning unit is configured to clean the dispensing probe with the heated probe cleaner.

11. The probe cleaning unit according to claim 10, wherein

the probe cleaning unit is configured such that an outer surface of the dispensing probe is cleaned by immersing the dispensing probe in the probe cleaner stored in the storage section, and an inner surface of the dispensing probe is cleaned by aspirating the probe cleaner by the dispensing probe,
the syringe causes the probe cleaner to overflow from the storage section before the dispensing probe is first cleaned, and
the probe cleaning unit is configured to clean the dispensing probe after the probe cleaner is caused to overflow and after a liquid level of the probe cleaner is stabilized.

12. The probe cleaning unit according to claim 11, wherein
the probe cleaning unit is configured to clean the dispensing probe without causing the probe cleaner to overflow from the storage section after the liquid level of the probe cleaner is stabilized.

13. The probe cleaning unit according to claim 11, wherein

the syringe causes the probe cleaner to overflow from the storage section before cleaning, each time the dispensing probe is cleaned, and
the probe cleaning unit is configured to, in each cleaning, clean the dispensing probe after the probe cleaner is caused to overflow and after the liquid level of the probe cleaner is stabilized.

14. The probe cleaning unit according to claim 10, wherein

the probe cleaning unit is configured such that an outer surface of the dispensing probe is cleaned by immersing the dispensing probe in the probe cleaner stored in the storage section, and an inner surface of the dispensing probe is cleaned by aspirating the probe cleaner by the dispensing probe,
the syringe causes the probe cleaner to overflow from the storage section before cleaning, each time the dispensing probe is cleaned, and
the syringe aspirates the probe cleaner from the storage section into the first flow path after the probe cleaner is caused to overflow and after a liquid level of the probe cleaner is stabilized.

15. The probe cleaning unit according to claim 1, wherein
the probe cleaning unit is configured to clean the dispensing probe by immersing the dispensing probe in the heated probe cleaner and allowing the dispensing probe to aspirate the probe cleaner and maintaining the state for a predetermined time.

16. The probe cleaning unit according to claim 15, wherein

the probe cleaning unit is configured such that an outer surface of the dispensing probe is cleaned by immersing the dispensing probe in the probe cleaner stored in the storage section, and an inner surface of the dispensing probe is cleaned by aspirating the probe cleaner by the dispensing probe,
the dispensing probe discharges the probe cleaner aspirated by the dispensing probe after the dispensing probe is cleaned by the immersion,
the probe cleaning unit is configured to perform cleaning with the probe cleaner a predetermined number of times after the dispensing probe discharges the probe cleaner, and
the probe cleaning unit cleans the inner surface and the outer surface of the dispensing probe only in a latter half or a last time of the predetermined number of times of cleaning.

17. The probe cleaning unit according to claim 16, wherein
in any of the predetermined number of times of cleaning, the probe cleaning unit performs cleaning for removing a droplet of the probe cleaner when the droplet is adhered to a tip of the dispensing probe, and does not perform cleaning when no droplet is adhered.

# FIG. 1

# FIG. 2

FIRST PROBE CLEANER

SECOND PROBE CLEANER

DRAIN

# FIG. 3A

# FIG. 3B

# FIG. 4A

# FIG. 4B

## FIG. 5

| STORAGE CAPACITY (AMOUNT OF LIQUID TO BE HEATED) | POSITIVE-LITTLE | NEGATIVE-MUCH | AVERAGE-MUCH | AVERAGE-MUCH |
|---|---|---|---|---|
| REPLACEMENT RATE | POSITIVE-GOOD | NEGATIVE-BAD | POSITIVE-GOOD | POSITIVE-GOOD |
| AMOUNT OF DECREASE IN LIQUID LEVEL WHEN ASPIRATING PROBE CLEANER | NEGATIVE-MUCH | POSITIVE-LITTLE | AVERAGE-LITTLE | POSITIVE-LITTLE |

EP 4 644 913 A1

# FIG. 6

| No. | SHAPE OF DETERGENT STORAGE CYLINDER 304 | PROPORTION OF PROJECTED PORTION | NUMBER OF CUTS | AFTER FILLING WITH FIRST PROBE CLEANER | AFTER FILLING WITH SECOND PROBE CLEANER | DETERMI-NATION |
|---|---|---|---|---|---|---|
| 6-1 | | PROJECTED PORTION 100% (CUT PORTION 0%) | 0 | | | NEGATIVE |
| 6-2 | BOTTOM SURFACE OF CUT PORTION | PROJECTED PORTION 60% (CUT PORTION 40%) | 3 LOCATIONS | | | AVERAGE |
| 6-3 | BOTTOM SURFACE OF CUT PORTION | PROJECTED PORTION 40% (CUT PORTION 60%) | 3 LOCATIONS | | | AVERAGE |
| 6-4 | | PROJECTED PORTION 50% (CUT PORTION 50%) | 4 LOCATIONS | | | AVERAGE |
| 6-5 | BOTTOM SURFACE OF CUT PORTION | PROJECTED PORTION 50% (CUT PORTION 50%) | 4 LOCATIONS | | | POSITIVE |

EP 4 644 913 A1

# FIG. 7

# FIG. 8

EP 4 644 913 A1

# FIG. 9

204

- ASPIRATION 1 — OVERFLOW DISCHARGE 1
- ASPIRATION 2 — DISCHARGE (CLEANING 1)
- OVERFLOW DISCHARGE 2
- ASPIRATION 3 — DISCHARGE (CLEANING 2)
- OVERFLOW DISCHARGE 3
- ASPIRATION 4 — DISCHARGE (CLEANING 3)
- RESIDUAL DISCHARGE

FILL DETERGENT SUPPLY SYRINGE WITH PROBE CLEANER

PLUNGER UPPER LIMIT

RESET LIQUID LEVEL HEIGHT OF DETERGENT STORAGE SECTION

HEAT

PLUNGER OPERATION

OFF    ON    OFF

300

## FIG. 10

| | WP→RP | | RP→WP | |
|---|---|---|---|---|
| ROTATE | | | | |
| UPPER AND LOWER | RISE | LOWER | LOWER WHILE ASPIRATING | |
| 29 | | | CLEAN BY ASPIRATING AND SOAKING IN HEATED PROBE CLEANER | DISCHARGE DETERGENT |
| 11a OUTER CLEANING | | | | ON |
| 11a INNER CLEANING | | | | ON |

NO INNER CLEANING IS PERFORMED WHEN ASPIRATING HEATED PROBE CLEANER FOR FIRST TIME AND SECOND TIME

WP: CLEANING TANK
RP: HEATED PROBE CLEANER ASPIRATING POSITION

26

## INTERNATIONAL SEARCH REPORT

| International application No. |
|---|
| **PCT/JP2023/040371** |

**A.    CLASSIFICATION OF SUBJECT MATTER**

*G01N 35/10*(2006.01)i
FI:    G01N35/10 F

According to International Patent Classification (IPC) or to both national classification and IPC

**B.    FIELDS SEARCHED**

Minimum documentation searched (classification system followed by classification symbols)

G01N35/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2017/141626 A1 (HITACHI HIGH-TECHNOLOGIES CORPORATION) 24 August 2017 (2017-08-24) <br> paragraphs [0017]-[0098], fig. 2-16 | 1-17 |
| Y | JP 2018-509627 A (BECKMAN COULTER INC.) 05 April 2018 (2018-04-05) <br> paragraphs [0064], [0072], fig. 2A | 1-17 |
| Y | JP 2015-111159 A (KABUSHIKI KAISHA TOSHIBA) 18 June 2015 (2015-06-18) <br> paragraphs [0054]-[0055], fig. 5 | 5-6 |
| A | US 2015/0323220 A1 (DUMITRESCU, Nicolae) 12 November 2015 (2015-11-12) <br> entire text, all drawings | 1-17 |
| A | WO 2017/141627 A1 (HITACHI HIGH-TECHNOLOGIES CORPORATION) 24 August 2017 (2017-08-24) <br> entire text, all drawings | 1-17 |

☐ Further documents are listed in the continuation of Box C.     ☑ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/040371**

| Patent document cited in search report | | | Publication date (day/month/year) | Patent family member(s) | | | Publication date (day/month/year) |
|---|---|---|---|---|---|---|---|
| WO | 2017/141626 | A1 | 24 August 2017 | US 2019/0041415 A1 paragraphs [0037]-[0138], fig. 2-16 | | | |
| JP | 2018-509627 | A | 05 April 2018 | WO 2016/149666 A1 paragraphs [0064], [0072], fig. 2A | | | |
| JP | 2015-111159 | A | 18 June 2015 | US 2011/0274584 A1 paragraphs [0104]-[0107], fig. 5 | | | |
| US | 2015/0323220 | A1 | 12 November 2015 | WO 2013/169841 A1 | | | |
| WO | 2017/141627 | A1 | 24 August 2017 | JP 2019-74311 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008202945 A